(19) Europäisches Patentamt
European Patent Office
Office européen des brevets

(11) Publication number : **0 490 454 B1**

(12) **EUROPEAN PATENT SPECIFICATION**

(45) Date of publication of patent specification : **10.11.93 Bulletin 93/45**

(51) Int. Cl.$^5$ : **C10M 133/56,** C08F 8/32

(21) Application number : **91203249.7**

(22) Date of filing : **10.12.91**

(54) **Alkenyl succinimides as luboil additives.**

(30) Priority : **12.12.90 GB 9027000**

(43) Date of publication of application : **17.06.92 Bulletin 92/25**

(45) Publication of the grant of the patent : **10.11.93 Bulletin 93/45**

(84) Designated Contracting States : **BE DE ES FR GB IT NL**

(56) References cited :
**EP-A- 0 268 214**
**EP-A- 0 355 895**
**EP-A- 0 400 869**
**FR-A- 1 288 976**
**GB-A- 1 031 130**
**GB-A- 2 231 873**
**NL-A- 6 402 968**
**SU-A- 298 206**
**SU-A- 564 309**
**US-A- 3 445 386**

(73) Proprietor : **SHELL INTERNATIONALE RESEARCH MAATSCHAPPIJ B.V.**
**Carel van Bylandtlaan 30**
**NL-2596 HR Den Haag (NL)**

(72) Inventor : **Schenk, Cornelis**
**11, Oaks Park**
**Canterbury, Kent CT2 9DP (GB)**

**EP 0 490 454 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to alkenyl succinimide derivatives, particularly to such derivatives useful as dispersant additives in lubricating oil compositions, to their preparation and to lubricating compositions containing them.

US Patent No. 3,172,892 discloses alkenyl succinimides, useful as dispersants in lubricant compositions, which are the reaction products of alkenyl succinic acids and anhydrides with at least about one-half the equivalent amount of an ethylene amine such as ethylene diamine, diethylene triamine, triethylene tetramine, tetraethylene pentamine and pentaethylene hexamine, which amines may be prepared by reaction of ethylene dichloride with ammonia. The alkenyl succinic acids and anhydrides are prepared by reaction of maleic anhydride with a high molecular weight olefin or a chlorinated high molecular weight olefin. As examples of suitable olefins are mentioned polyethylene, polypropylene and polyisobutylene. Polyisobutylene is said to be particularly preferred, although in Example 10 a polypropenyl succinic anhydride was prepared by reaction of a chlorinated polypropylene having a molecular weight of about 900 and a chlorine content of 4% with maleic anhydride. The resulting polypropenyl succinic anhydride was reacted with "Polyamine H", a mixture of ethylene amines having a composition which approximates to tetraethylene pentamine. No indication of the structure of the polypropenyl moiety is given.

US Patent No. 3,184,474 relates to a product formed by reacting alkenyl succinic acid, (or, preferably, anhydride) with a polyhydric material and a polyamine. The product is stated to be useful as dispersant and antirust additive in hydrocarbon compositions such as heating and fuel oils, gasolines, and, especially, lubricants. The three reactants are preferably combined in about equal molar proportions. The polyhydric material is preferably a polyalkylene glycol, e.g. tetraethylene glycol. The polyamine is preferably an ethylene or propylene amine, e.g. tetraethylene pentamine. The alkenyl succinic anhydrides are described as being readily prepared by reacting maleic anhydride with an organic compound having a double bond at its end, preferably a polymer of a $C_2$ to $C_5$ mono-olefin, generally having a molecular weight of about 700 to 3000, e.g. about 800 to 1300. The polymer is preferably polyisobutylene, and no example of any other polymer is given. US Patent No. 3,184,474 apparently assumes that such polymers will have double bonds at their ends, and no analysis is given to demonstrate the actual structure of the polyisobutylene used in the Example. Similarly, no polymerisation process prescriptions are made to ensure that the polymers will have double bonds at their ends.

US Patent No. 3,445,386 discloses lubricant compositions containing polypropenyl succinimide amides, imidazolines and imidazolidines,wherein the polypropenyl group is derived from polypropene having a molecular weight of from about 500 to about 3000, preferably about 800 to 1400, as detergents. The succinimide products are also disclosed as being useful as fuel additives. The succinimide products are made by reacting a polypropene and maleic anhydride or acid together to form the corresponding polypropenyl succinic compound, which is then reacted with an amide or an amine imidazoline or imidazolidine. Suitable amides and amine imidazolines and imidazolidines are prepared by reacting an alkylene polyamine with a monocarboxylic acid or an aldehyde or ketone. No indication of the structure of the polypropylene group is given.

Polymers having chain structures containing principally repeating units with identical configurations are known as isotactic polymers, whereas polymers containing principally repeating units of exactly alternating configurations are known as syndiotactic polymers. Polymers wherein the chain structures show no regular order of repeating unit configurations are known as atactic polymers. Isotactic and syndiotactic polymers have well-defined X-ray diffraction patterns and considerably different physical properties from the amorphous, atactic polymers.

V.G. Ostroverkhov et al., Neftepererab, Nefterkhim (Kiev), 31, 32-36 (1986), "Succinimide and oxazoline additives based on propylene oligomers" discloses the preparation of alkenyl succinic anhydrides by reaction of propylene oligomers, preferably having molecular mass greater than 700, with maleic anhydride with heating at 230°C for 12 hours in the presence of 10% xylene with addition of a small quantity of benzoyl chloride. The resulting alkenyl succinic anhydrides are reacted with diethylene triamine to produce bis-succinimide lubricating oil additives having detergent/dispersant properties. PMR (proton magnetic resonance) spectra are stated to show that the propylene oligomers, which were prepared under mild conditions using a catalyst based on aluminium chloride, contain two types of $C=CH_2$, and a small number of C=CH structures. However, the number of double bonds determined according to the iodine number is considerably greater than that calculated from the PMR spectra taking into account the value for molecular mass. This fact is explained by the presence of tetrasubstituted C=C. The active matter contents of the products of reaction of the propylene oligomers with maleic anhydride are given in Table II, and range from 38.9% to 65.7%.

V.M. Bludilin et al., Soversh,. Tekhnol. Proiz-va Prisadok 69-75, Kiev, "Nauk dumbka", 1976, "Improving the technology of preparing alkenyl succinic anhydrides in the production of succinimide additives" discloses the preparation of succinimide additives, imide derivatives of alkenyl succinic acids or their anhydrides and

polyamines, as ashless detergent additives for engine oils. In the preparation of the alkenyl succinic anhydrides, inter alia, atactic polypropylene, mol. wt. 900-1200, was reacted with maleic anhydride by free-radical reaction using peroxide initiators, e.g. benzoyl peroxides, azo-bis-isobutyronitrile, and di-tert-butyl peroxide, maximum conversion being attained using di-tert-butyl peroxide. There is no indication of the detailed molecular structure of the atactic polypropylene used, but it is noteworthy that the maximum value (Figure 1) for degree of conversion of atactic polypropylene in the above free-radical reaction is 53%.

It has now surprisingly been discovered that by using a selected class of atactic propylene oligomers it is possible to prepare very effective alkenyl succinimide dispersant additives for lubricating oils, with surprisingly enhanced active matter content.

According to the present invention there are thus provided alkenyl succinimide derivatives, useful as dispersant additives in lubricating oil compositions, having an alkenyl group derived from an atactic propylene oligomer substantially of the formula

$$H-(\overset{\overset{CH_3}{|}}{C}H-CH_2)_n-\overset{\overset{CH}{|}}{C}=CH_2 \qquad (I)$$

where n is in the range 15 to 120, having number average molecular weight ($M_n$) in the range 700 to 5000, and molar ratio succinic acid moieties : atactic propylene oligomer in the range 1:1 to 1.5:1, wherein the succinimide is derived from a $C_{1-50}$ amine.

The number average molecular weight ($M_n$) of the atactic propylene oligomer is determined by quantitative reaction with ozone on the assumption that each oligomer chain contains one double bond, as will be readily understood by those skilled in the art.

The upper value of 5000 for $M_n$ of the atactic propylene oligomer is due to the fact that molecular weights above 5000 can give handling problems in preparation of the alkenyl succinimide derivatives from the atactic propylene oligomer due to viscosity levels. The lower value of 700 for the $M_n$ is because low molecular weight products tend to be less effective as dispersants.

Preferably, the alkenyl group is derived from an atactic propylene oligomer of formula I, which has n in the range 15 to 70 and $M_n$ in the range 700 to 3000, and more preferably n is in the range 20 to 60 and $M_n$ is in the range 900 to 2500.

In accordance with the invention, the alkenyl succinimide derivatives of the invention may be prepared by a process which comprises (a) reacting an atactic propylene oligomer as defined above with maleic anhydride, and (b) reacting the resulting succinated propylene oligomer with $C_{1-50}$ amine.

If desired, step (a) may be effected in analogous method to that of US Patent No. 3,172,892 discussed above. Alternatively, step (a) may be effected by free-radical reaction, e.g. in analogous manner to the method of V.M. Bludilin et al., discussed above.

Preferably however, the atactic propylene oligomer is reacted directly with maleic anhydride at a temperature in the range 175 to 250°C, preferably 190 to 235°C, more preferably 200 to 235°C. The molar ratio maleic anhydride : atactic propylene oligomer is advantageously in the range 1:1 to 5:1, preferably 1.2:1 to 4:1, more preferably 1.5:1 to 3.6:1.

Step (b) may very conveniently be effected at a temperature in the range 140 to 200°C, preferably 160 to 180°C.

The molar ratio succinic acid moieties : atactic propylene oligomer (succination ratio, r) of the products of step (a) is readily calculated from the following expression:

$$r = \frac{M_n \times AV}{(20 \times AM - AV \times 98)}$$

in which:

$M_n$ = Number average molecular weight of the atactic propylene oligomer
AV = Acid value of the reaction product (meq/g)
AM = Active matter in the reaction product (%w) "Active matter" denotes propylene oligomer bearing carboxylic acid groupings, from which it will be understood that the unreacted propylene oligomer does not contribute to the AM.

Preferably the molar ratio succinic acid moieties : atactic propylene oligomer is in the range 1:1 to 1.3:1, more preferably 1:1 to 1.2:1.

The invention also provides succinated propylene oligomer intermediates prepared by reaction of maleic anhydride with an atactic propylene oligomer substantially of formula I as defined above. Such intermediates

are the products of step(a) above.

The $C_{1-50}$ amines employed in the instant invention can be branched or unbranched, saturated, aliphatic, primary or secondary amines and are preferably higher polyamines such as alkylene polyamines, wherein pairs of nitrogen atoms are joined by alkylene groups of 2 to 4 carbon atoms. Thus the amine is preferably a polyamine of formula

$$H\text{-}(NH\text{-}(CH_2)_p)_m\text{-}NH_2 \qquad (II)$$

wherein m is 1 to 9, preferably 3 to 5 and p is 2 to 4 preferably 2.

Examples of preferred such polyamines include triethylene tetramine (TETA), tetraethylene pentamine (TEPA) and pentaethylene hexamine (PEHA). Commercial sources of these products, which are generally used for operational convenience, normally contain mixture of different polyamines, with one or more products predominating.

The molar coupling ratio succinic acid moieties : amine is preferably in the range 1:1 to 3:1, more preferably 1.5:1 to 2.5:1.

It is preferred that at least 90%w, preferably at least 95%w, of the atactic propylene oligomer is of formula I.

Number average molecular weight ($M_n$) and weight average molecular weight ($M_w$) can be determined by gel permeation chromatography, with suitable calibration, in order to determine the ratio $M_w/M_n$, which is a measure indicating the width of molecular weight distribution. $M_w/M_n$ values for polyolefins typically fall in the range 1.5 to 4.0. For the atactic propylene oligomers from which the succinimide derivatives of the present invention are prepared, $M_w/M_n$ determined by gel permeation chromatography is preferably 3.0 or less, more preferably 2.5 or less.

Such atactic propylene oligomers may conveniently be prepared, for example, using as catalyst a bis(cyclopentadienyl) zirconium compound, e.g. bis(cyclopentadienyl) zirconium dichloride, and a methyl aluminoxane, in manner analogous, particularly, to the process of Comparative Example 1 of EP-A-268 214, or, more generally, to the process described in EP-A-69951.

In the process of the invention it has surprisingly been found advantageous to use an atactic propylene oligomer in step (a) without prior washing to remove catalyst residues. The resulting product and by-products of step (a) have been found to be cleaner and more readily handled than if the oligomer has previously been so washed.

The alkenyl succinimide derivatives of the present invention find their prime application as additives for lubricating oils, although they may be incorporated in hydrocarbon fuels such as gasolines. Accordingly, the present invention further provides a lubricating composition which comprises a major proportion of a lubricating oil and a minor proportion, preferably from 0.1 to 10%w, especially 0.5 to 5%w, (based on the total composition) of a succinimide derivative as defined above. The lubricating oil used in such compositions can be natural, mineral or synthetic in origin. Natural lubricating oils include animal and vegetable oils, such as castor oil. Mineral oils comprise the lubricating oil fractions derived from crude oils, coal or shale, which fractions may have been subjected to certain treatments such as clay-acid, solvent or hydrogenation treatments. Synthetic lubricating oils include synthetic polymers of hydrocarbons, modified alkylene oxide polymers, and ester lubricants, which are known in the art. These lubricating oils are preferably crankcase lubricating oils for spark-ignition and compression-ignition engines, but include also hydraulic lubricants, metal-working fluids and automatic transmission fluids. The lubricating composition may contain various other additives, known in the art, such as viscosity index improvers, e.g. linear or star-shaped polymers of a diene such as isoprene or butadiene, or a copolymer of such a diene with optionally substituted styrene. These copolymers are suitably block copolymers and are preferably hydrogenated to such an extent as to saturate most of the olefinic unsaturation. Other suitable additives include dispersant V.I. improvers such as those based on block copolymers, or polymethacrylates, extreme pressure/anti-wear additives such as zinc or sodium dithiophosphates, anti-oxidants, friction modifiers or metal-containing detergents such as phenates, sulphonates, alkylsalicylates or naphthenates, all of which detergents may be overbased.

The lubricating composition according to the invention has excellent dispersancy properties.

The lubricating composition according to the present invention is suitably prepared by blending an additives concentrate into the lubricating base oil. Such a concentrate generally comprises a lubricating oil as solvent/diluent and one or more additives in a concentrated form. Hence the present invention further provides a lubricating oil concentrate comprising a lubricating oil and a succinimide derivative as described above, in an amount of 10 to 80%w based on the total concentrate.

The present invention will be further understood from the following illustrative Examples.

## EXAMPLES 1 to 4

### Preparation and characterisation of Atactic Propylene Oligomers

Atactic propylene oligomers of molecular weights ($M_n$) 1070 (1), 1455 (2) 1710 (3) and 2130 (4), as determined by quantitative reaction with ozone, on the basis of each molecule containing one double bond, were prepared by methods analogous to that disclosed in Comparative Example 1 of EP-A-268 214, with variation of reaction temperature to achieve the different molecular weights, reaction being terminated by addition of methanol, except that the molar ratio methylaluminoxane: bis (cyclopentadienyl) zirconium dichloride was 1500:1 instead of 600:1 used in Comparative Example 1 of EP-A-268 214.

The resulting oligomers were filtered and used without removal of ash.

Values for $M_w/M_n$ determined by gel permeation chromatography (gpc) were all 2.5 or less.

The molecular structures of the oligomers were investigated by $C_{13}$ NMR. In each case the $C_{13}$ NMR spectra show the presence of only two types of unsaturated carbon atoms, viz. $=CH_2$ (delta = 111.4 ppm) and $-C(CH_3)=$ (delta = 144.4 ppm) of which the methyl group (delta = 22.2 ppm) is clearly recognisable, thus indicating terminal vinylidene groups of formula $-C(CH_3)=CH_2$. From the spectra it can thus be deduced that at least 95% of the polymer chains posses such terminal groups. The spectra show reasonably well defined peaks for the $CH_3$, $CH_2$ and CH carbon atoms along the chain and well defined peaks for the carbon atoms of n-propyl groups at the starting end of the polymer chains (c.f. Tsutsui et al, Polymer, 1989, Vol.30, 428-431). The oligomers are thus all substantially of the formula

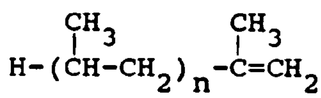

By contrast with the above atactic propylene oligomers 1 to 4, prior art atactic propylene oligomers, typified by, for example, the commercially available atactic propylene oligomer "AMOCO 9013" (trade mark) ex Amoco, which is a colourless liquid, flash point 93°C, specific gravity 0.86, viscosity 65-80 $mm^2/s$ at 99°C (ASTM D445) having molecular weight ($M_n$) 900 are heavily branched and isomerised. The $C_{13}$ NMR spectrum of "AMOCO 9013" has complicated multi-peak signals, delta = 117 - 141 ppm for olefinic carbon atoms and delta = 7 - 52 ppm carbon atoms along the chain, indicative of virtually random positioning of the olefinic double bond in the oligomer chains.

## EXAMPLES 5 TO 7

### Reaction of Atactic Propylene Oligomers with Maleic Anhydride

Atactic propylene oligomer 1 (1685 g, 1.57 mol) and maleic anhydride (MALA) (461 g, 4.71 mol) were heated together at reflux temperature (200°C) in a glass reactor equipped with baffles, turbine stirrer, reflux condenser, nitrogen inlet, temperature probe and electrical heating mantle for 4½ hours. Unreacted maleic anhydride was removed by vacuum distillation. The residue was then allowed to cool to ambient temperature (20°C), diluted with heptane to about 50% w and insoluble matter was removed by filtration. The heptane was then evaporated off yielding a clear, light yellow viscous liquid product (1728 g) which was found to have active matter content of 94.2%w and acid value 1.74 milli-equivalents/g (meq/g). This analysis data indicates a succination ratio of 1.1mol MALA/mol propylene oligomer.

Active matter content was determined by separating inactive material from the desired active matter on an aluminium oxide column using diethyl ether as eluant. Acid value was determined by potentiometric titration with aqueous potassium hydroxide of a weighed amount of product dissolved in a toluene/methyl ethyl ketone/t-butanol/water mixture.

The procedure of Example 5 was repeated using atactic propylene oligomers 3 and 4. Results are given in Table I following.

TABLE I

| Example | Oligomer | Mol Oligomer | Mol MALA | Reaction Time(Hr) | Product: Active Matter Content (%w) | Product: Acid Value (meq/g) | Product: Succination Ratio |
|---|---|---|---|---|---|---|---|
| 5 | 1 | 1.57 | 4.71 | 4.5 | 94.2 | 1.74 | 1.1 |
| 6 | 3 | 0.72 | 2.32 | 7 | 93.3 | 1.07 | 1.05 |
| 7 | 4 | 0.73 | 2.2 | 24 | 92.9 | 0.93 | 1.1 |

The product of Example 7 was a clear red viscous liquid; a sample of reaction mixture after 7 hours reaction time had active matter content 81.7%w.

Comparative Example A

"AMOCO 9013" atactic propylene oligomer (2089.8 g 2.61 mol) and maleic anhydride (768 g, 7.84 mol) were reacted together by the procedure of Example 5. A sample of reaction mixture removed after 7 hours showed active matter content in isolated product of only 41.3%w. After total reaction time of 24 hours, the isolated product, which was a clear red viscous liquid, had active matter content 62.4%w and acid value 1.38 meq/g, indicating succination ratio 1.0 mol MALA/mol propylene oligomer. Insoluble matter removed by filtration in isolation of the desired product was a black tarry substance in an amount of 4.3%w of the product reaction mixture.

EXAMPLE 8

Reaction of Atactic Propylene Oligomer with Maleic Anhydride

Atactic propylene oligomer 3 (309.8 g, 0.18 mol) and maleic anhydride (61.3 g, 0.62 mol) were heated together over 1 hour to 235°C with stirring in a 0.5 l internal volume stainless steel autoclave, and maintained at that temperature for a further 7 hours. The product (331.5g) was isolated as in Example 5 and was found to have active matter content of 98%w, acid value 1.41 meq/g, and succination ratio 1.3 mol MALA/mol propylene oligomer.

EXAMPLE 9

Reaction of Atactic Propylene Oligomer with Maleic Anhydride

Atactic propylene oligomer 2 (73.8 g, 0.0507 mol) and maleic anhydride (17.8 g, 0.18 mol) were reacted together in similar manner to Example 5, except that the reaction mixture was maintained at 200°C for 10 hours. The product (65.8 g) was isolated as in Example 5 (the filtration procedure yielding 2.1%w on total product of an off-white powder as insoluble by-product) and was found to have active matter content of 95.2%w, acid value 1.29 meq/g and succination ratio 1.05 mol MALA/mol propylene oligomer.

EXAMPLE 10

Reaction of (washed) Atactic Propylene Oligomer with Maleic Anhydride

Atactic propylene oligomer 2 (107 g, 0.073 mol) was dissolved in n-heptane (350 ml) and the resulting solution was washed successively with methanolic sodium hydroxide (3.3 g in 100 ml) and with water (2 x 100 ml). A portion of the resulting resulting purified oligomer (86g, 0.06 mol) was then reacted with maleic anhydride (20.7 g, 0.21 mol) as in Example 9. The resulting isolated product was a brownish viscous material (the filtration procedure having yielded 1.4%w on total product of a black tarry substance as insoluble by-product) which was found to have active matter content of 95.1%w, acid value 1.32 meq/g and succination ratio 1.1 mol MALA/mol propylene oligomer.

EXAMPLES 11 TO 17

Reaction of succinated propylene oligomers with amines

Succinated propylene oligomer product from Example 5 (1505.2 g) was heated to 180°C in a glass reactor equipped with baffles, turbine stirrer, dropping funnel, Dean and Stark water separator, nitrogen inlet, temperature probe and electrical heating mantle. Triethylene tetramine (TETA) (100.6g) was added dropwise over 1 hour, and reaction was allowed to continue, at 180°C, for a further three hours, during which time water generated by the reaction was removed. At the end of this period, the residue was allowed to cool to ambient temperature, yielding the desired succinimide product as an amber-brown viscous liquid, which was found to have active matter content of 93.5%w, residual acid value 0.02 meq/g, total nitrogen content 2.22%w and basic nitrogen content 1.07%w.

Active matter content and acid value were determined as in Example 5. Total nitrogen content was determined using an elemental analyser (Carlo-Erba), and basic nitrogen was determined by potentiometric acid titration according to ASTM method D 2896-73.

The procedure of Example 11 was repeated using succinated propylene oligomers of Examples 5, 6, 7, 8

and a number of different amines. A corresponding procedure was effected using the succinated propylene oligomer product of Comparative Example A. Results of all these procedures are given in Table II following.

TABLE II

| Example | Succinated Propylene Oligomer (SPO) | wt SPO (g) | Amine | wt Amine (g) | SPO: Amine (mol: mol) | Product: Active Matter Content (%w) | Product: Residual Acid Value meq/g | Product: Nitrogen Content Total (%w) | Product: Nitrogen Content Basic (%w) |
|---|---|---|---|---|---|---|---|---|---|
| 11 | 5 | 1505.2 | TETA | 100.6 | 2.0:1 | 93.5 | 0.02 | 2.22 | 1.07 |
| 12 | 5 | 77.6 | TETA | 6.92 | 1.5:1 | 94.7 | 0.07 | 2.82 | 1.49 |
| 13 | 5 | 104.2 | TEPA | 8.55 | 2.0:1 | 91.9 | 0.02 | 2.79 | 1.54 |
| 14 | 6 | 66.8 | TEPA | 4.56 | 1.5:1 | 95.6 | 0.01 | 2.25 | 1.28 |
| 15 | 6 | 1165 | PEHA | 87.5 | 2.0:1 | 95.4 | 0.04 | 2.25 | 1.38 |
| 16 | 7 | 1458.3 | PEHA | 76.5 | 2.5:1 | 93.1 | 0.02 | 1.63 | 0.82 |
| 17 | 8 | 99.5 | TEPA | 6.97 | 2.0:1 | 98.1 | 0.02 | 2.35 | 1.25 |
| Comparative B | Comparative A | 2047.3 | TETA | 103.4 | 2.1:1 | 64.2 | 0.06 | 1.55 | 0.68 |

TETA = triethylene tetramine
TEPA = tetraethylene pentamine
PEHA = pentaethylene hexamine

It will be particularly noted that the active matter content of the succinated propylene oligomer product of Comparative Example A was significantly lower (62.4%w) than the active matter contents of the products of Examples 5 to 10 (all greater than 92%w). Correspondingly, the succinimide product of Comparative Example B had significantly lower active matter content (64.2%w) than those of the succinimide products of Examples 11 to 17 (all greater than 91%w).

EXAMPLE 18

Tests

The succinimide products of Example 11 to 17 and Comparative Example B were each diluted to an active matter content of 50%w by addition of "HVI 60" base oil (a bright and clear high viscosity index base oil having viscosity at 100°C 4.4 to 4.9 $mm^2/s$ (ASTM D 2270)). The resulting concentrates were then tested as follows:-

(i) Carbon Black Dispersancy Test (CBDT) (British Rail publication BR 669 : 1984)

Samples of a SAE 15W40 Middle East lubricating oil containing a commercial package of a zinc dialkyldithiophosphate, an overbased calcium alkyl salicylate and VI improver, were modified by incorporation of concentrate to give oils containing succinimide products at a concentration of 1%w active matter. 3%w of carbon black was then added to each oil and (percentage) increase in kinematic viscosity at 60°C was determined, using an Ubbelohde viscometer. A low result indicates good performance. The absolute values obtained are dependent on the active surface area of the carbon black used, and therefore comparative series should be tested with identical samples of carbon black.

(ii) Fluoroelastomer Seal Compatibility Test (FSCT)

The concentrates were incorporated in lubricating oils to give concentrations of 1.5%w active matter (succinimide product) and tested for compatibility with fluoroelastomer seal materials according to the method of DIN 53504 and, specifically, Daimler Benz specification DB 6615. Percentage reduction in tensile strength (TS) and elongation at break (EB) were assessed. The test results depend upon the particular seal materials used, and therefore comparative series should be tested with seals from consistent batches.

Results of these tests are given in Table III following:

TABLE III

| Succinimide Product of Example | CBDT (%) | | | FSCT | | | |
|---|---|---|---|---|---|---|---|
| | | | | TS % | | EB (%) | |
| | a | b | c | d | e | d | e |
| 11 | 226 | - | - | 29 | - | 27 | - |
| 12 | 128 | - | - | 50 | - | 44 | - |
| 13 | 108 | - | - | 42 | - | 39 | - |
| 14 | 195 | - | - | 26 | - | 30 | - |
| 15 | 164 | - | - | 23 | - | 24 | - |
| 16 | - | - | 26 | - | 8 | - | 7 |
| 17 | 183 | - | - | 26 | - | 21 | - |
| Comp. B | - | 100 | | - | 20 | - | 13 |
| "SAP 220" | 205 | 98 | 30 | 44 | 27 | 45 | 26 |

"SAP 220" is a commercially available polyisobutylene-derived bis-succinimide ashless dispersant.

a, b and c represent test series using different carbon black samples.

d and e represent test series using fluoroelastomer seals from different seal batches.

EXAMPLE 19

Engine Tests

The concentrate containing the succinimide product of Example 11 was blended in an amount giving 2.5%w active matter (succinimide product) in an APE SG/CD luboil containing some 13%w of of an additive package comprising overbased salicylate detergent, VI (viscosity index) improver, zinc-based anti-wear additive and polymethacrylate pour-point depressant. The resulting oil was evaluated according to sequence VE ASTM (as described in "Sequence VE test procedure", 7th draft dated 19th May 1988; ASTM Monitoring Centre, 4400 5th Avenue, Pittsburgh, USA).

For the purposes of comparison, similar evaluations were carried out on the succinimide product of Comparative Example B and on commercially available polyisobutylene-derived bis-succinimide ashless dispersant "SAP 220", at the same active matter concentration. Results of the tests are given in Table IV following.

TABLE IV

| Dispersant | Engine Test | | |
|---|---|---|---|
| | AES | AEV | ACW inches $x10^{-3}$ (m x $10^{-6}$) |
| Example 11 | 9.23 | 5.55 | 2.91 (74) |
| Comp. B | 4.57 | 3.93 | 0.51 |
| "SAP 220" | 6.81 | 3.83 | 3.05 (77.5) |

AES = Average Engine Sludge ) scale 0 to 10, where
) 10 represents zero
) sludge or varnish
AEV = Average Engine Varnish )
ACW = Average Cam lobe Wear

EXAMPLE 20

Engine Tests

Similar sequence VE tests to the procedure of Example 19 was effected by blending the concentrates containing the succinimide products of Examples 15 and 16 in amounts giving 1.75%w active matter (succinimide product) in the same API SG/CD luboil.

For the purposes of comparison, similar evaluations were carried out on commercially available polyisobutylene-derived succinimide ashless dispersant "LZ 6418", at the same active matter concentration. Results of the tests are given in Table V following.

TABLE V

| Dispersant | Engine Test | | | | |
|---|---|---|---|---|---|
| | AES | RCS | AEV | PSV | ACW inches $x10^{-3}$ ($m\ x10^{-6}$) |
| Example 15 | 9.43 | 9.35 | 5.49 | 6.39 | 0.67 (17.0) |
| Example 16 | 9.36 | 9.29 | 5.81 | 6.56 | 0.92 (23.4) |
| Example 16* | 9.22 | 9.26 | 5.45 | 6.83 | 7.98 202.7 |
| LZ 6418 | 6.05 | 2.39 | 4.36 | 7.06 | 2.65 (67.3) |

* concentration of succinimide product was 1.25%w active matter instead of 1.75%w.

AES = Average Engine Sludge )
) (scale 0 to 10, where 10
) represents zero sludge
RCS = Rocker Cover Sludge ) or varnish)
AEV = Average Engine Varnish)
PSV = Piston Skirt Varnish )
ACW = Average Cam lobe Wear

EXAMPLE 21

Free-radical reaction of Atactic Propylene Oligomers with Maleic Anhydride

Atactic propylene oligomer of molecular weight ($M_n$) 1120, as determined by quantitative reaction with ozone, was prepared analogously to atactic propylene oligomers 1 to 4, and was found to have corresponding $C_{13}$ NMR spectra, and hence corresponding molecular structure.

Following the procedure of V.M. Bludilin et al., Soversh. Tekhnol, Proiz-va Prisadok 69-75, Kiev, "Nauk dumbka", 1976, "Improving the technology of preparing alkenyl succinic anhydrides in the production of succinimide additives", succinated propylene oligomer was prepared by free-radical reaction. Thus, a glass reactor equipped with baffles, turbine stirrer, reflux condenser, nitrogen inlet, dropping funnel and electrical heating mantle, was charged with a 50%w solution in xylene of the atactic propylene oligomer of $M_n$ 1120 (84.6 g oligomer, 0.075 mol), maleic anhydride (7.4 g, 0.075 mol) was added, and the mixture was heated with stirring to reflux temperature. A solution of di-tert-butyl peroxide (2.7 g, 0.018 mol) in xylene (64 g) was introduced into the reactor via the dropping funnel over 10 minutes, and reaction was continued at reflux temperature with continuous stirring for a further 3 hours. The xylene and unreacted maleic anhydride were distilled off at 180°C and reduced pressure (down to 5 mm Hg (666 Pa.s)). The residue was dissolved in heptane to about 50%w and filtered to remove insoluble by-product (0.8%w on total product). The heptane was then evaporated off, yielding a clear, pale-yellow viscous product which was found to have active matter content (degree of conversion) of 71.6%w and acid value 1.39 meq/g, indicating succination ratio 1.2 mol MALA/mol propylene oligomer.

Comparative Example C

Commercially available atactic propylene oligomer "AMOCO 9013" (63.7 g, 0.08 mol), as a 50%w solution in xylene, was reacted with maleic anhydride (7.8 g, 0.08 mol) and di-tert-butyl peroxide (2.9 g, 0.02 mol) in xylene (62 g), by the method of Example 21. Insoluble by-product amounted to 8%w on total product. The clear yellow viscous product was found to have active matter content (degree of conversion) of 40%w, acid value

1.22 meq/g and succination ratio 1.45 mol MALA/mol propylene oligomer.

Comparative Example D

Commercially available polyisobutylene "HYVIS 10" (trade mark) $M_n$ 980 (86 g, 0.088 mol) as a 50%w solution in xylene, was reacted with maleic anhydride (8.6 g, 0.088 mol) and di-tert-butyl peroxide (3.9 g, 0.027 mol) in xylene (90 g), by the method of Example 21. Insoluble by-product amounted to 7.8%w on total product. The clear yellow viscous product was found to have active matter content (degree of conversion) of 48.2%w, acid value 1.2 meq/g and succination ratio 1.4 mol MALA/mol polyisobutylene.

The degrees of conversion in Comparative Examples C and D are consistent with those obtained by V.M. Bludilin et al., which were maximum values of 53%w for "atactic polypropylene" and 58%w for polyisobutylene (Figure 1), indicating that the Bludilin et al. polypropylene and polyisobutylene had comparable molecular structures to those of "AMOCO 9013" and "HYVIS 10". By contrast, the very surprisingly high degree of conversion of 74.4%w obtained in Example 21, indicates that the atactic propylene oligomer of $M_n$ 1120 of Example 21 was clearly different from the "atactic polypropylene" used by Bludilin et al.

## Claims

### Claims for the following Contracting States : BE, DE, FR, GB, IT, NL

1. An alkenyl succinimide derivative, useful as dispersant additive in lubricating oil compositions, having an alkenyl group derived from an atactic propylene oligomer substantially of the formula

$$H-(CH(CH_3)-CH_2)_n-C(CH_3)=CH_2 \qquad (I)$$

where n is in the range 15 to 120, having number average molecular weight ($M_n$) in the range 700 to 5000, and molar ratio succinic acid moieties : atactic propylene oligomer in the range 1:1 to 1.5:1, wherein the succinimide is derived from a $C_{1-50}$ amine.

2. A succinimide derivative according to Claim 1 wherein the alkenyl group is derived from an atactic propylene oligomer of formula I has n in the range 15 to 70 and $M_n$ in the range 700 to 3000.

3. A succinimide derivative according to Claim 2 wherein n is in the range 20 to 60 and $M_n$ is in the range 900 to 2500.

4. A succinimide derivative according to any one of Claims 1 to 3 wherein the molar ratio succinic acid moieties : atactic propylene oligomer is in the range 1:1 to 1.3:1.

5. A succinimide derivative according to Claim 4 wherein the molar ratio is in the range 1:1 to 1.2:1.

6. A succinimide derivative according to any one of Claims 1 to 5 wherein the amine is a polyamine of formula

$$H-(NH-(CH_2)_p)_m-NH_2 \qquad (II)$$

wherein m is 1 to 9 and p is 2 to 4.

7. A succinimide derivative according to Claim 6 wherein m is 3 to 5.

8. A succinimide derivative according to Claim 6 or 7 wherein p is 2.

9. A succinimide derivative according to any one of Claims 6 to 8 wherein the molar coupling ratio succinic acid moieties : amine is in the range 1:1 to 3:1.

10. A succinimide derivative according to any one of Claims 1 to 9 wherein at least 95%w of the atactic propylene oligomer is of formula I.

11. A succinimide derivative according to any one of Claims 1 to 10 wherein the value $M_w/M_n$ of the propylene oligomer determined by gel permeation chromatography is 2.5 or less.

12. A process for the preparation of an alkenyl succinimide derivative according to any one of Claims 1 to 12 which comprises (a) reacting an atactic propylene oligomer as defined in Claim 1 with maleic anhydride, and (b) reacting the resulting succinated propylene oligomer with $C_{1-50}$ amine.

13. A lubricating composition comprising a major amount of a lubricating oil and a minor amount of a succinimide derivative according to any one of Claims 1 to 11.

14. Succinated propylene oligomer intermediate prepared by reaction of maleic anhydride with an atactic propylene oligomer substantially of formula I as defined in Claim 1.

**Claims for the following Contracting State : ES**

1. A process for the preparation of an alkenyl succinimide derivative, useful as dispersant additive in lubricating oil compositions, having an alkenyl group derived from an atactic propylene oligomer substantially of the formula

$$H-(\overset{CH_3}{\overset{|}{CH}}-CH_2)_n-\overset{CH_3}{\overset{|}{C}}=CH_2 \qquad (I)$$

where n is in the range 15 to 120, having number average molecular weight ($M_n$) in the range 700 to 5000, and molar ratio succinic acid moieties: atactic propylene oligomer in the range 1:1 to 1.5:1, wherein the succinimide is derived from a $C_{1-50}$ amine, which process comprises (a) reacting an atactic propylene oligomer as defined above with maleic anhydride, and (b) reacting the resulting succinated propylene oligomer with $C_{1-50}$ amine.

2. A process according to Claim 1 wherein the alkenyl group is derived from an atactic propylene oligomer of formula I has n in the range 15 to 70 and $M_n$ in the range 700 to 3000.

3. A process according to Claim 2 wherein n is the range 20 to 60 and $M_n$ is in the range 900 to 2500.

4. A process according to any one of Claims 1 to 3 wherein the molar ratio succinic acid moieties: atactic propylene oligomer is in the range 1:1 to 1.3:1.

5. A process according to Claim 4 wherein the molar ratio is in the range 1:1 to 1.2:1.

6. A process according to any one of Claims 1 to 5 wherein the amine is a polyamine of formula

$$H-(NH-(CH_2)_p)_m-NH_2$$

wherein m is 1 to 9 and p is 2 to 4.

7. A process according to Claim 6 wherein m is 3 to 5.

8. A process according to Claim 6 or 7 wherein p is 2.

9. A process according to any one of Claims 6 to 8 wherein the molar coupling ratio succinic acid moieties: amine is the range 1:1 to 3:1.

10. A process according to any one of Claims 1 to 9 wherein at least 95%w of the atactic propylene oligomer is of formula I.

11. A process according to any one of Claims 1 to 10 wherein the value $M_w/M_n$ of the propylene oligomer determined by gel permeation chromatography is 2.5 or less.

12. A process for the preparation of lubricating composition comprising forming a blend of a major amount of a lubricating oil and a minor amount of a succinimide derivative prepared by a process according to any one of Claims 1 to 11.

## Patentansprüche

### Patentansprüche für folgende Vertragsstaaten : BE, DE, FR, GB, IT, NL

1. Ein Alkenylsuccinimidderivat, welches sich als Dispersant-Zusatz in Schmierölzusammensetzungen eignet, mit einer Alkenylgruppe, die sich von einem ataktischen Propylenoligomer ableitet, welches im wesentlichen der Formel

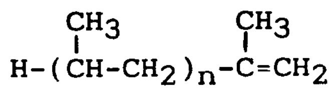

(I)

entspricht, in welcher n im Bereich von 15 bis 120 liegt, und welches ein durchschnittliches Molekulargewicht (Zahlenmittel; $M_n$) im Bereich von 700 bis 5000 aufweist, wobei das Molverhältnis der von Bernsteinsäure abgeleiteten Molekülteile zu dem ataktischen Propylenoligomeren im Bereich von 1:1 bis 1,5:1 liegt, und das Succinimid sich von einem $C_{1-50}$-Amin ableitet.

2. Ein Succinimidderivat gemäß Anspruch 1, in welchem sich die Alkenylgruppe von einem ataktischen Propylenoligomer der Formel I ableitet, in welcher n im Bereich von 15 bis 70 liegt und das Durchschnittsmolekulargewicht $M_n$ im Bereich von 700 bis 3000 liegt.

3. Ein Succcinimidderivat gemäß Anspruch 2, in welchem n im Bereich von 20 bis 60 und $M_n$ im Bereich von 900 bis 2500 liegt.

4. Ein Succinimidderivat gemäß irgendeinem der Ansprüche 1 bis 3, in welchem das Molverhältnis der von Bernsteinsäure abgeleiteten Molekülteile zu dem ataktischen Propylenpolymer im Bereich von 1:1 bis 1,3:1 liegt.

5. Ein Succinimidderivat gemäß Anspruch 4, in welchem das entsprechende Molverhältnis im Bereich von 1:1 bis 1,2:1 liegt.

6. Ein Succinimidderivat nach irgendeinem der Ansprüche 1 bis 5, in welchem das Amin ein Polyamin der nachstehenden Formel

$$H\text{-}(NH\text{-}(CH_2)_p)_m\text{-}NH_2 \qquad (II)$$

ist, in welcher m einen Wert von 1 bis 9 und p einen Wert von 2 bis 4 hat.

7. Ein Succinimidderivat gemäß Anspruch 6, in welchem m einen Wert von 3 bis 5 hat.

8. Ein Succinimidderivat gemäß Anspruch 6 oder 7, in welchem p den Wert 2 hat.

9. Ein Succinimidderivat nach irgendeinem der Ansprüche 6 bis 8, in welchem das molare Kupplungsverhältnis zwischen den von Bernsteinsäure abgeleiteten Molekülteilen und dem Amin im Bereich von 1:1 bis 3:1 liegt.

10. Ein Succinimidderivat nach irgendeinem der Ansprüche 1 bis 9, in welchem mindestens 95 Gew% des ataktischen Propylenoligomers der Formel I entsprechen.

11. Ein Succinimidderivat nach irgendeinem der Ansprüche 1 bis 10, in welchem der Wert des Verhältnisses $M_w/M_n$ des Propylenoligomers, bestimmt mittels Gelpermeations-Chromatographie, einen Wert von 2,5 oder weniger hat.

12. Ein Verfahren zur Herstellung eines Alkenylsuccinimidderivates gemäß irgendeinem der Ansprüche 1 bis 11, welches (a) das Umsetzen eines ataktischen Propylenoliogomers, wie in Anspruch 1 definiert, mit Maleinsäureanhydrid, und (b) die weitere Umsetzung des mit Bernsteinsäure modifizierten Propylenoligomers mit einem $C_{1-50}$-Amin umfaßt.

13. Eine Schmierölzusammensetzung, umfassend einen Hauptanteil eines Schmieröls und einen geringeren Anteil eines Succinimidderivats gemäß irgendeinem der Ansprüche 1 bis 11.

**14.** Mit Bernsteinsäure modifiziertes Propylenoligomer-Zwischenprodukt, hergestellt durch Umsetzung von Maleinsäureanhydrid mit einem ataktischen Propylenoligomeren, im wesentlichen entsprechend der Formel I, wie in Anspruch 1 definiert.

**Patentansprüche fur folgenden Vertragsstaat : ES**

**1.** Ein Verfahren zur Herstellung eines Alkenylsuccinimidderivats, welches sich als Dispersant-Zusatz in Schmierölzusammensetzungen eignet, mit einer Alkenylgruppe, die sich von einem ataktischen Propylenoligomer ableitet, welches im wesentlichen der Formel

$$H-(\overset{\overset{CH_3}{|}}{C}H-CH_2)_n-\overset{\overset{CH_3}{|}}{C}=CH_2 \qquad (I)$$

entspricht, in welcher n im Bereich von 15 bis 120 liegt, und welches ein durchschnittliches Molekulargewicht (Zahlenmittel; $M_n$) im Bereich von 700 bis 5000 aufweist, wobei das Molverhältnis der von Bernsteinsäure abgeleiteten Molekülteile zu dem ataktischen Propylenoligomeren im Bereich von 1:1 bis 1,5:1 liegt, und das Succinimid sich von einem $C_{1-50}$-Amin ableitet, welches Verfahren (a) das Umsetzen eines ataktischen Propylenoligomers, wie oben definiert, mit Maleinsäureanhydrid, und (b) das Umsetzen des resultierenden mit Bernsteinsäure modifizierten Propylenoligomers mit $C_{1-50}$-Amin umfaßt.

**2.** Ein Verfahren gemäß Anspruch 1, in welchem sich die Alkenylgruppe von einem ataktischen Propylenoligomer der Formel I ableitet, in welcher n im Bereich von 15 bis 70 liegt und das Durchschnittsmolekulargewicht $M_n$ im Bereich von 700 bis 3000 liegt.

**3.** Ein Verfahren gemäß Anspruch 2, in welchem n im Bereich von 20 bis 60 und $M_n$ im Bereich von 900 bis 2500 liegt.

**4.** Ein Verfahren gemäß irgendeinem der Ansprüche 1 bis 3, in welchem das Molverhältnis der von Bernsteinsäure abgeleiteten Molekülteile zu dem ataktischen Propylenpolymer im Bereich von 1:1 bis 1,3:1 liegt.

**5.** Ein Verfahren gemäß Anspruch 4, in welchem das entsprechende Molverhältnis im Bereich von 1:1 bis 1,2:1 liegt.

**6.** Ein Verfahren nach irgendeinem der Ansprüche 1 bis 5, in welchem das Amin ein Polyamin der nachstehenden Formel

$$H\text{-}(NH\text{-}(CH_2)_p)_m\text{-}NH_2 \qquad (II)$$

ist, in welcher m einen Wert von 1 bis 9 und p einen Wert von 2 bis 4 hat.

**7.** Ein Verfahren gemäß Anspruch 6, in welchem m einen Wert von 3 bis 5 hat.

**8.** Ein Verfahren gemäß Anspruch 6 oder 7, in welchem p den Wert 2 hat.

**9.** Ein Verfahren nach irgendeinem der Ansprüche 6 bis 8, in welchem das molare Kupplungsverhältnis zwischen den von Bernsteinsäure abgeleiteten Molekülteilen und dem Amin im Bereich von 1:1 bis 3:1 liegt.

**10.** Ein Verfahren nach irgendeinem der Ansprüche 1 bis 9, in welchem mindestens 95 Gew% des ataktischen Propylenoligomers der Formel I entsprechen.

**11.** Ein Verfahren nach irgendeinem der Ansprüche 1 bis 10, in welchem der Wert des Verhältnisses $M_w/M_n$ des Propylenoligomers, bestimmt mittels Gelpermeations-Chromatographie, einen Wert von 2,5 oder weniger hat.

**12.** Ein Verfahren zur Herstellung einer Schmierölzusammensetzung, welches das Bilden einer Mischung einer größeren Menge eines Schmieröls und einer kleineren Menge eines Succinimidderivats, das durch ein Verfahren nach einem der Ansprüche 1 bis 11 hergestellt worden ist, umfaßt.

## Revendications

### Revendications pour les Etats contractants suivants : BE, DE, FR, GB, IT, NL

1. Un dérivé alkényl succinimide, utile comme additif dispersant dans des compositions d'huiles lubrifiantes, ayant un groupe alkényle dérivé d'un oligomère atactique du propylène substantiellement de la formule

$$H-(\overset{CH_3}{\overset{|}{C}}H-CH_2)_n-\overset{CH_3}{\overset{|}{C}}=CH_2 \qquad (I)$$

où n est compris dans l'intervalle de 15 à 120, ayant un poids moléculaire moyen en nombre ($M_n$) compris entre 700 et 5000, et un rapport molaire des portions acide succinique à l'oligomère atactique du propylène compris entre 1:1 et 1,5:1, le succinimide étant dérivé d'une amine en $C_{1-50}$.

2. Un dérivé de succinimide selon la revendication 1, dans lequel le groupe alkényle est dérivé d'un oligomère atactique du propylène de formule I pour lequel n a une valeur comprise entre 15 et 70 et $M_n$ est compris entre 700 et 3000.

3. Un dérivé de succinimide selon la revendication 2, dans lequel n a une valeur comprise entre 20 et 60 et $M_n$ est compris entre 900 et 2500.

4. Un dérivé de succinimide selon l'une quelconque des revendications 1 à 3, dans lequel le rapport molaire des portions acide succinique à l'oligomère atactique du propylène est compris entre 1:1 et 1,3:1.

5. Un dérivé de succinimide selon la revendication 4, dans lequel le rapport molaire est compris entre 1:1 et 1,2:1.

6. Un dérivé de succinimide selon l'une quelconque des revendications 1 à 5, dans lequel l'amine est une polyamine de formule

$$H-(NH-(CH_2)_p)_m-NH_2 \qquad (II)$$

où m est un nombre de 1 à 9 et p est un nombre de 2 à 4.

7. Un dérivé de succinimide selon la revendication 6, dans lequel m va de 3 à 5.

8. Un dérivé de succinimide selon la revendication 6 ou 7, dans lequel p est 2.

9. Un dérivé de succinimide selon l'une quelconque des revendications 6 à 8, dans lequel le rapport molaire de couplage des portions acide succinique à l'amine est compris entre 1:1 et 1:3.

10. Un dérivé de succinimide selon l'une quelconque des revendications 1 à 9, dans lequel au moins 95 % en poids de l'oligomère atactique du propylène est de formule I.

11. Un dérivé de succinimide selon l'une quelconque des revendications 1 à 10, dans lequel la valeur du rapport $M_w/M_n$ de l'oligomère de propylène déterminée par chromatographie de perméation sur gel est de 2,5 ou moins.

12. Un procédé pour la préparation d'un dérivé alkényl succinimide selon l'une quelconque des revendications 1 à 16, qui comprend (a) la réaction d'un oligomère atactique du propylène tel que défini dans la revendication 1 avec l'anhydride maléique et (b) la réaction de l'oligomère succinaté résultant avec une amine en $C_{1-50}$.

13. Une composition lubrifiante comprenant une quantité majeure d'une huile lubrifiante et une quantité mineure d'un dérivé de succinimide selon l'une quelconque des revendications 1 à 11.

14. Un produit intermédiaire oligomère de propylène succinaté préparé par réaction d'anhydride maléique avec un oligomère atactique du propylène substantiellement de formule I comme défini dans la revendication 1.

**Revendications pour l'Etat contractant suivant : ES**

1. Un procédé pour la préparation d'un dérivé alkényl succinimide, utile comme additif dispersant dans des compositions d'huiles lubrifiantes, ayant un groupe alkényle dérivé d'un oligomère atactique du propylène substantiellement de la formule

$$H-(\overset{CH_3}{\overset{|}{C}H}-CH_2)_n-\overset{CH_3}{\overset{|}{C}}=CH_2 \qquad (II)$$

ou n est compris dans l'intervalle de 15 à 120, ayant un poids moléculaire moyen en nombre ($M_n$) compris entre 700 et 5000, et un rapport molaire des portions acide succinique à l'oligomère atactique du propylène compris entre 1:1 et 1,5:1, le succinimide étant dérivé d'une amine en $C_{1-50}$, qui comprend (a) la réaction d'un oligomère atactique du propylène tel que définici-dessus avec l'anhydride maléique et (b) la réaction de l'oligomère succinaté résultant avec une amine en $C_{1-50}$.

2. Un procédé selon la renvendication 1, dans lequel le groupe alkényle est dérivé d'un oligomère atactique du propylène de formule I pour lequel n a une valeur comprise entre 15 et 70 et $M_n$ est compris entre 700 et 3000.

3. Un procédé selon la revendication 2, dans lequel n a une valeur comprise entre 20 et 60 et $M_n$ est compris entre 900 et 2500.

4. Un procédé selon l'une quelconque des revendications 1 à 3, dans lequel le rapport molaire des portions acide succinique à l'oligomère atactique du propylène est compris entre 1:1 et 1,3:1.

5. Un procédé selon la revendication 4, dans lequel le rapport molaire est compris entre 1:1 et 1,2:1.

6. Un procédé selon l'une quelconque des revendications 1 à 5, dans lequel l'amine est une polyamine de formule

$$H\text{-}(NH\text{-}(CH_2)_p)_m\text{-}NH_2 \qquad (II)$$

où m est un nombre de 1 à 9 et p est un nombre de 2 à 4.

7. Un procédé selon la revendication 6, dans lequel m va de 3 à 5.

8. Un procédé selon la revendication 6 ou 7, dans lequel p est 2.

9. Un procédé selon l'une quelconque des revendications 6 à 8, dans lequel le rapport molaire de couplage des portions acide succinique à l'amine est compris entre 1:1 et 3:1.

10. Un procédé selon l'une quelconque des revendications 1 à 9, dans lequel au moins 95% en poids de l'oligomère atactique du propylène est de formule I.

11. Un procédé selon l'une quelconque des revendications 1 à 10, dans lequel la valeur $M_w/M_n$ du rapport de l'oligomère de propylène déterminée par chromatographie de perméation sur gel est de 2,5 ou moins.

12. Un procédé pour la préparation d'une composition lubrifiante, qui comprend la formation d'un mélange d'une quantité majeure d'une huile lubrifiante et une quantité mineure d'un dérivé de succinimide préparé par un procédé selon l'une quelconque des revendications 1 à 11.